# EUROPEAN PATENT SPECIFICATION

(11) **EP 1 452 059 B1**
(45) Date of publication and mention of the grant of the patent: **15.04.2009**
(21) Application number: 02782065.3
(22) Date of filing: 20.11.2002
(51) Int. Cl.: H04W 8/04, H04L 29/12, H04L 12/56

(54) **METHOD AND SYSTEM FOR PROVIDING ROAMING FOR A DATA TERMINAL BETWEEN LOCAL NETWORKS CONNECTED TO A CONTROL COMMUNICATION NETWORK**
VERFAHREN UND SYSTEM ZUM BEREITSTELLEN DES ROAMING FÜR EIN DATENENDGERÄT ZWISCHEN LOKALEN NETZWERKEN, DIE MIT EINEM STEUERKOMMUNIKATIONSNETZWERK VERBUNDEN SIND
PROCEDE ET SYSTEME PERMETTANT L'ITINERANCE D'UN TERMINAL DE DONNEES ENTRE DES RESEAUX LOCAUX CONNECTES A UN RESEAU DE COMMUNICATION DE COMMANDE

(30) Priority: 22.11.2001 SE 0103891
(43) Date of publication of application: 01.09.2004
(73) Proprietor: TELIASONERA AB, 106 63 Stockholm (SE)
(72) Inventor: NYCKELGARD, Sören, S-448 34 Floda (SE); OLSSON, Urban, S-431 46 Mölndal (SE)
(74) Representative: Hopfgarten, Nils
(86) International application number: PCT/SE2002/002110
(87) International publication number: WO 2003/045105

(56) References cited:
- WO-A1-01/31472
- WO-A1-97/21313
- WO-A2-00/11881
- WO-A2-01/76188
- US-A- 5 819 178

## Description

### Technical field

The present invention generally relates to roaming between data communication networks. More exactly, the present invention relates to data communication devices, a system and a method for making roaming possible for a data communication terminal between local data communication networks which are connected to a central data communication network.

### Prior art

A user of a mobile terminal for packed switched data communication, such as a portable computer, hand computer, mobile telephony etc normally moves physically between different network segments, such as local data communication networks. It is in this case talked about roaming for the mobile terminal between local data communication networks. To make the packet switched communication possible, the mobile terminal must have an address, such as an IP-address in the case with data communication over an IP-protocol.

There today exist systems for such roaming where an address is allocated in the network segment to which the user's mobile terminal at the time being is connected. In this case problems will arise with maintaining data communication sessions in progress when the mobile terminal is connected to a new network segment.

The patent document WO-01/31472, A1 relates to a system, method and product for providing mobility support from a first IP network environment. This solution enables the end user to use his/her mobile terminal/unit in any location to originate and receive calls and access a subscribed network in a transparent manner, and the network to maintain the user's ongoing communication as she/he roams across (radio) cells within the same subnet, and subnets within the same or different administrative domains. This solution supports terminal mobility without the need for any special element within the network.

The patent document WO-01/76188, A2 relates to the routing of data within communications networks, including but not confined to networks such as the Internet, and particularly, but not exclusively, to a method of routing data directed to a mobile node. In this solution a protocol is provided which is backward compatible with Mobile IP and Mobil IP with route optimisation. The new protocol uses existing defined messages, utilising unused bits to overcome the problems of triangular routing and tunneling.

The patent document US-5,819,178 relates to methods and apparatus for obtaining subscriber data for a mobile terminal roaming in a service area of a visited wireless network, the visited wireless network receives from the roaming mobile terminal a registration request specifying an identifier. If subscriber data corresponding to the identifier cannot be found at an HLR of the visited wireless network or at a VLR associated with the HLR, an Intersystem Roaming (ISR) database is searched for an address corresponding to the identifier. If such an address is found, a subscriber data request is transmitted to the address. If no such address is found, the subscriber data request is broadcast to plural wireless networks connected to the visited wireless network. Subscriber data received in response to the subscriber data request is stored in the ISR. The method and apparatus are particularly useful for supporting roaming of mobile terminals that cannot identify the location of their subscriber data.

The patent document WO-00/11881 relates to a method for routing links through a packet-oriented communication network. In a system comprising on one hand a packet- oriented communication network (IPN) with one or several zones (HD, VD) exhibiting each at least one network unit (GAK, GAW), and on the other hand a mobile communication network (PLMN) exhibiting at least one home location register (HLR) and using a signalling protocol (CCS7), said unit (GAK, GAW) supports said signalling protocol (CCS7) for inter-connectability with said home location register (HLR) of the mobile network (PLMN) as well as from the packet-oriented communication network (IPN), said network unit (GAK, GAW) makes use of the signalling protocol (CCS7) to send a request to the home location register (HLR) of the mobile network (PLMN) whether routing of the link is carried out in the packe-oriented communication network (IPN) or in the mobile network (PLMN).

The patent document WO-97/21313 relates to a mobile packet data communications system. Packet data is routed from a packet data network to a mobile subscriber served by a base station and a base station controller by encapsulating the packet at providing the encapsulated packet with temporary address information for transport of the packet to the mobile subscriber via the base station controller.

In other systems for roaming the mobile terminal has a permanent IP-address. All data communication to and from the mobile terminal is passing via these systems via a connecting node which is located in the user's home network. This, however, will result in annoying delays at data communication between the mobile terminal and another terminal which is located close to the mobile terminal in the case when the mobile terminal is located at a large distance from its home network.

### Summary of the invention

The aim of the present invention is to solve above mentioned problem that data communication sessions are negatively influenced when a mobile terminal is moved from one network segment to another network segment and that the delays in the data communication occur at roaming.

The invention is among other things based on the knowledge that the responsibility for the handling of roaming neither shall be connected with the local network to which a data communication device is connected at a given point of time, or with a central unit to which the data communication device is permanently connected.

According to a first aspect of the invention, a data communication device is provided which is connected to a central data communication network, for handling of roaming for a data communication terminal between local data communication networks which are connected to the central data communication network. The data communication device includes a reception device for reception of current association information which indicates that the data communication terminal is associated with the data communication device and fox reception of current roaming information which indicates a current local data communication device which is connected to a local data communication network to which the data communication terminal is connected. The data communication device further includes a storing device for storing of the current association information, and the current roaming information, an address handling device for allocation of a temporary address to the data communication terminal, and a routing device for routing of a data packet, which has the data communication terminal as receiver, to the current local data communication device.

According to the first aspect of the invention consequently a data communication device is provided to which the data communication terminal can be associated temporarily. The data communication device further is not connected only to the current local data communication network to which the data communication terminal is connected. Instead the data communication device receives/obtains current roaming information regarding the data communication terminal and consequently looks after where data packets, which have the data communication device as receiver, shall be routed. Further possibility for utilization of a plurality of data communication devices is which can be arranged regionally in the central data communication network is offered. By this the problems with delays, which occur in known systems where data packets are routed via a connection node in the home network of the data communication terminal which can be located far from the current local data communication network to which the data communication terminal is connected, are removed.

The address handling device is preferably arranged to allocate a temporary address which is selected among a plurality of addresses which are specific for the data communication device. By the temporary address being selected in this way it will be possible to, by inspection of the address of the data communication terminal, see that it is associated with the data communication device.

The current roaming information further preferably indicates if the data communication terminal ceases to be connected to the local data communication network to which the current local data communication device is connected and the routing device after such information cuts off/stops the routing of data packets, which have the data communication terminal as receiver, to the current local data communication device. By the data communication device being informed about that the data communication terminal is no longer connected to a local data communication network, it can for instance buffer data packets which have the data communication terminal as receiver. This occurs for instance when the data communication terminal is moved from one local data communication network to another. When the data communication terminal is connected to the new local data communication network, the data communication device will receive current roaming information which indicates a new current local data communication device which is connected to the new local data communication network to which the data communication terminal is connected. The routing now can be resumed and buffered data packets be routed to the new current local data communication device.

Further the address handling device is preferably arranged to set the temporary address free after one in advance predetermined time from that current roaming information is received which indicates that the data communication terminal has ceased to be connected to the local data communication network to which the current local data communication device is connected. A condition for that this shall occur, however, is that no current roaming information which indicates a new current local data communication device which is connected to a local data communication network to which the data communication terminal is connected has been received meanwhile. In the cases when the data communication terminal is not connected to any new local data communication network, the data communication device will not receive any new current roaming information. That the temporary address then is set free after one in advance determined period of time results in that the using of addresses in the network can be limited. The number of addresses which are used for data communication terminals is mainly equal to the number of data communication terminals which are connected to the network.

The current roaming information preferably also indicates the address to the current local data communication device. The routing device is in this case arranged to assemble data packets which have data communication terminal as receiver, in a tunneling data packet each. The tunneling data packets have the address of the data communication device as transmitter address, and address of the current local communication device as receiver address. By the routing being made to the current local data communication device it is sufficient that the address of the current local data communication device is known in the central data communication network. Data packets, which are addressed to the data communication terminal, which are received in the data communication device, are there routed forward to the current local data communication device.

According to a second aspect of the invention a data communication device is provided which is connected to a local data communication network and to a central data communication network, to make roaming possible for a data communication terminal between local data communication networks. The data communication device includes a detection device for detection of that the data communication terminal is connected the local data communication network, and a reception device for reception of current association information, which indicates a current central data communication device, to which the data communication terminal is associated. The data communication device further includes a transmission device for transmission of current roaming information, which indicates that the data communication terminal is connected to the local data communication network and a routing device for routing of data packets which have the data communication terminal as transmitter/sender.

By the data communication device according to the second aspect receiving the association information, which indicates the current central data communication device of a plurality of central data communication devices, and transmits current roaming information, the data communication device need not allocate any address to the data communication terminal, which address is associated to the local data communication network to which the data communication device is connected. Instead the address can be allocated by the current central data communication device. This results in that the data communication terminal can be connected to another local data communication network without negative influence of data communication sessions in progress which relates to the data communication terminal.

The detection device is preferably also arranged to detect that the data communication terminal ceases to be connected to the local data communication network. The transmission device is in this case further arranged to transmit current roaming information which indicates that the data communication terminal has ceased to be connected to the local data communication network. This facilitates the location of a data communication terminal when it is connected to a new local data communication network by that the current central data communication device, in addition to current roaming information from a data communication device, which is connected to the new local data communication network, which current roaming information indicates that the data communication terminal is connected to the new local data communication network, also will have current roaming information which indicates that the data communication terminal is no longer connected to the old local data communication network. If the connection to the new local data communication network is not made directly, the current central data communication device can cut off the routing of data packets, which have the data communication device as receiver, to the data communication device which is connected to the old local data communication network. The current central data communication device then resumes the routing when current roaming information is received which indicates that the data communication terminal has been connected to the new data communication network. Further this makes possible that the current central data communication device, when current roaming information is received which indicates that the data communication terminal is no longer connected to the old local data communication network and no current roaming information is received which indicates that the data communication terminal is connected to a new local data data communication network during one in advance determined period of time, to ascertain that the data communication terminal is no longer active.

The routing device further is preferably arranged to assemble data packets which have the data communication terminal as transmitter, in a tunneling data packet each which has the address of the data communication device as transmitter/sender address and the address of the current central data communication device as receiver address. This is of advantage in local data communication networks where data packets with a transmitter/sender address which is not associated to the local data communication network are not allowed to be transmitted. By the data packets being assembled in a tunneling data packet, which has the data communication device as transmitter/sender, the data packets consequently can be allowed to be transmitted. Roaming which does not utilize allocation of an address to the data communication terminal, which address is associated to the local data communication network consequently can be realized without changes in existing equipment in the local data communication network, but only by addition of the data communication device.

According to a third aspect of the invention a system to make roaming possible for a data communication terminal between local data communication networks which are connected to a central data communication network is provided. The system includes local data communication devices, which are connected to a local data communication network each and to the central data communication network, central data communication devices, which are connected to the central data communication network and a central control unit, which is connected to the central data communication devices via the central data communication network. The central control unit includes association devices for association of the data communication terminal with a current central data communication device and transmission device for transmission of current association information which indicates that the data communication terminal is associated with the current central data communication device. The current central data communication device includes a reception device for reception of current association information, for reception of current roaming information which indicates a current local data communication device which is connected to a local data communication network to which the data communication terminal is connected. The current central data communication device further includes a storing device for storing of the current association information and the current roaming information, an address handling device for allocation of a temporary address to the data communication terminal and a routing device for routing of data packets, which have the data communication terminal as receiver, to the current local data communication device. The current local data communication device includes a detection device for detection of that the data communication terminal is connected to the local data communication network, a reception device for current association information which indicates the current central data communication device. The current local data communication device further includes a transmission device for transmission of the current roaming information and a routing device for routing of data packets, which have the data communication terminal as transmitter/sender, to the current central data communication device.

According to the third aspect of the invention a system consequently is provided in which the data communication terminal temporarily is associated to a current central data communication device. The current central data communication device further is not associated only to the current local data communication network to which the data communication terminal is connected. Instead the current local data communication device receives the association information and transmits current roaming information regarding the data communication terminal. The current central data communication device consequently looks after where data packets, which have the data communication device as receiver, shall be routed. Further, a plurality of central data communication devices are utilized which can be arranged regionally in the central data communication network. By this, problems with delays are eliminated which occur in known systems where data packets are routed via a connection node in the home network of the data communication terminal which can be located far from the current local data communication network to which the data communication terminal is connected. The current local data communication device need not allocate any address to the data communication terminal, which address is associated to the local data communication network to which the current local data communication device is connected. Instead, the address is allocated by the current central data communication device. This results in that the data communication terminal can be connected to another local data communication network without any negative influence from data communication sessions in progress which relate to the data communication terminal.

According to a fourth aspect of the invention a method for roaming for a data communication terminal between local data communication networks which are connected to a central data communication network is provided. According to the method, a data communication terminal is associated with a current central data communication device which is connected to the central data communication network. Further a current local data communication device is identified which is connected to a local data communication network to which the data communication terminal is connected and is allocated a temporary address to the data communication terminal. In the current central data communication unit, data packets are routed which have the data communication terminal as receiver, to the current local data communication device.

### Brief description of the drawings

The invention now will be described in detail in the following with reference to enclosed drawings, in which:
Figure 1 shows an overview of a block diagram over a data communication system in which one embodiment of a system according to the invention is realized;
Figure 2 shows an overview of a block diagram over a central data communication device according to one embodiment of the invention; and
Figure 3 shows an overview of a block diagram over a central data communication device according to one embodiment of the invention.

### Description of preferred embodiments

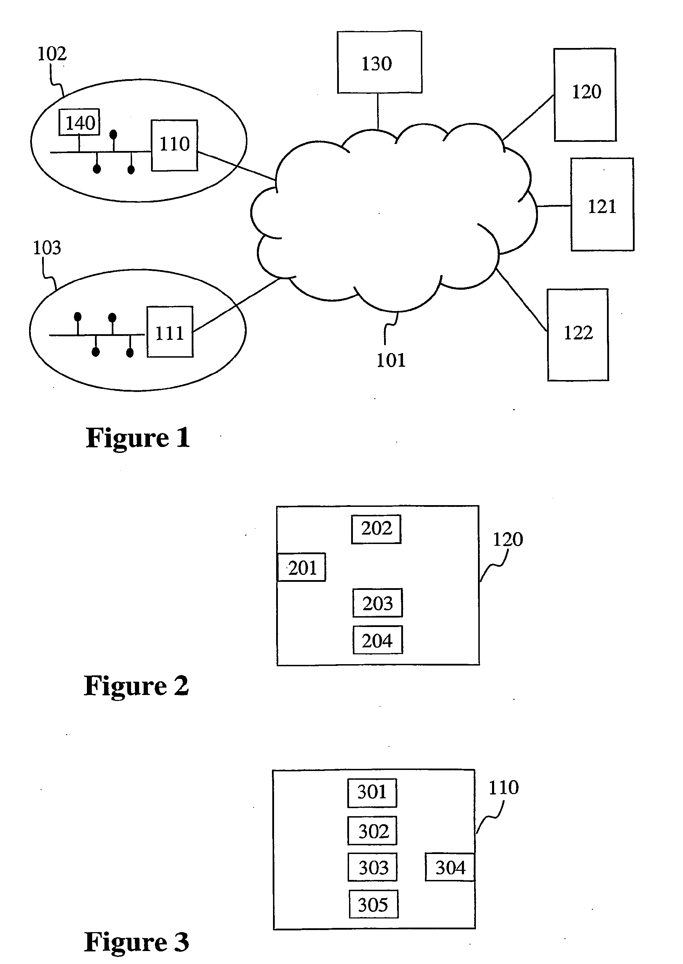

In Figure 1 a block diagram is shown over a data communication system in which one embodiment of a system according to the invention has been realized. To a central data communication network 101, for instance an IP-network, such as Internet, two local data communication networks 102 and 103, such as a wireless LAN or a fixed LAN, are connected via a local data communication device each, 110 respective 111. Further there are two central data communication devices 120, 121 and 122 and a central control unit 130 connected to the central data communication network 101. A data communication terminal 140 is shown in Figure 1 connected to the local data0 communication network 102.

The local data communication devices 110-111, the central data communication devices 120-122 and the central control unit make roaming possible for the data communication terminal 140 between the local data communication networks 102-103.

It should be noted that the number of local data communication networks and central data communication devices only has been chosen as examples. These numbers can be arbitrary. It is, however, preferred that the central data communication devices are arranged regionally in the central data communication network so that they primarily handle roaming between local data communication networks in the region so that the central data communication device, from a transmission point of view, is close to the local data communication network to which the data communication terminal is connected. The number of central data communication devices therefore normally is fewer than the number of local data communication networks. Further the number of central control units can be more than one.

In Figure 2 a block diagram over an embodiment of the central data communication device 120 in Figure 1 is shown. The central data communication device 120 includes a reception device 201 which is arranged to receive current association information which indicates that a data communication terminal 140 is associated with the central data communication device 120. The reception device 201 further is arranged to receive current roaming information which indicates the IP-address to a current local data communication device 110 which is connected to a local data communication network to which the data communication terminal 140 is connected, and to receive data packets which have the data communication terminal 140 as receiver and the network address (MAC-address) of the data communication terminal 140. The central data communication device 120 further includes a storing device 202 in which0 the current roaming information and the IP-address of the central control unit 130 are stored. The central data communication device 120 also includes address handling device 203 which is arranged to allocate a temporary IPaddress to the data communication terminal 140 and a routing device 204 which routes data packets, which are addressed to the data communication terminal, to the current data communication device. The temporary IP-address is selected among a number of addresses which are specific for the central data communication device 120. The routing device 305 assembles these data packets in a tunneling data packet which has the IP-address of the central data communication device 120 as transmitter/sender address and the IP-address of the current local data communication device 120 as receiver address. Note that the other two central data communication devices 121-122 in Figure 1 are designed in the same way as the central data communication device 120.

In Figure 3 a block diagram over an embodiment of the local data communication device 110 in Figure 1 is shown. The local data communication device 110 includes a detection device 301 for detection of that a data communication terminal 140 is connected to the local data communication network 102 and a reception device 302 for reception of current association information which indicates a current central data communication device 120. The detection device 301 further is arranged to detect that the data communication terminal 140 ceases to be connected to the local data communication network 102. The local data communication device 110 further includes a storing device 303 for storing of the current association information and a transmission device 304 for transmission of current roaming information which indicates that the data communication terminal 140 is connected to the local data communication network 102 to which the data communication terminal 102 is connected. The transmission device further is arranged to transmit current roaming information which indicates that the data communication terminal has ceased being connected to the local data communication network 102, to which the local data communication device 110 is connected. The local data communication device 110 further includes a routing device 305 for routing of data packets, which have the data communication terminal 140 as transmitter, to the current central data communication device 120. The routing device 305 assembles these data packets in a tunneling data packet which has the IP-address of the local data communication device 110 as transmitter address and the IP-address of the current central data communication device 120 as receiver address. Note that the other/second local data communication device 111 in Figure 1 is designed in the same way as the local data communication device 110.

Below an example when a data communication terminal 140 is started in a local data communication network 102 is described with reference to the Figures 1-3.

Initially all central data communication devices 120-122 and local data communication devices 110-111 are configured with the address to the central control unit 130. At start of a central or local data communication device it will authenticate itself to the central control unit 130 and establishes a secure signal channel to this, for instance by means of a 7CP-session over SSL (Secure Socket Layer). The central control unit 130 also receives information about the geographical location of the data communication device.

The local data communication devices store a list each over network addresses (MAC-addresses) for data communication terminals which are connected to the network. When a local data communication device 110 detects that a data communication terminal 140 is started in the local data communication network 102, which terminal 140 has a network address which does not exist in the list over network addresses of the local data communication device 110, the local data communication device 110 contacts the central control unit 130 and encloses information which uniquely identifies the terminal 140, for instance the physical network address (MAC-address) of the terminal 140 which is permanently programmed on the network card (not shown) of the terminal 140. The local data communication device 110 to which the terminal 140 has been connected is in the following called the current local data communication device 110.

The central control unit 130 acknowledges the user and associates by means of an association device (not shown) a central data communication device 120 at, from a transmission point of view, close distance to the current local data communication device 110. The selected central data communication device 120 is in the following called the current central data communication device 120. The central control unit 130 then transmits by means of a transmission device (not shown) association information which indicates that the data communication terminal 140 is associated with the current data communication device. The current central data communication device 120 then receives the current association information by means of the reception devices 201. Further, the current data communication device 120 is instructed by the central control unit 130 to allocate a logic address to the terminal 140, in this case an IP-address. The current central data communication device 120 allocates by means of the address handling device 203 to the terminal 140 a free IP-address of a number of IP-addresses which are specific for the current central data communication device 120. The current central data communication device 120 returns the allocated IP-address to the central control unit 130 if a free IP-address exists. If no free IP-address exists, the central control unit 130 will ask/inquire another central data communication device 121-122.

The current central data communication device 120 then stores for the allocated IP-address the network address (MAC-address) of the data communication terminal, the IPaddress to the current local data communication device 110 and the IP-address to the central control unit which has made the inquiry. This is made in the storing device 202 for each allocated IP-address.

The central control unit 130 then forwards the allocated IP-address to the current local data communication device 110, which in its turn forwards it to the data communication terminal 140.

The current local data communication device 110 then registers the network address of the data communication terminal 140 in the list over network addresses for connected terminals which it keeps up/maintains.

After this, communication can be executed to the data communication terminal 140 by data packets which are addressed to it being transmitted to the current central data communication device 120, which then tunnels the data packets to the current local data communication device 110. In opposite direction, the current local data communication device 110 tunnels data packets from the data communication terminal to the current central data communication device 120, which forwards the packets to the receiver.

Below is described an example when a data communication terminal 140, which already has been started, is connected to a local data communication network 102 with reference to the Figures 1-3.

When a local data communication device 110 detects that a data communication terminal 140 is connected to the local data communication network 102, is noted that the network address of the terminal 140 does not exist in the list over network addresses of the local data communication device 110. The local data communication device 110 then contacts the central control unit 130 and encloses information which uniquely identifies the terminal 140, for instance the physical network address (MAC-address) of the terminal 140, which is permanently programmed on the network card (not shown) of the terminal 140. The local data communication device 110 to which the terminal 140 has been connected is in the following called the current local data communication device 110.

The central control unit 130 acknowledges the user and notes from which central data communication device the data communication terminal has received its IP-address. This central data communication device 120 is in the following called the current central data communication device 120. If the current central data communication device has not received current roaming information, which indicates that the data communication terminal 140 has ceased to be connected to a previous local data communication network, the local data communication device, which is connected to this previous local data communication network, asks if the data communication terminal is connected to this previous local data communication network. The answer to this shall in the normal case be no.

According to one embodiment of the invention, the local data communication device, which is connected to the previous local data communication network, has detected that the data communication terminal 140 has ceased to be connected to the previous local data communication network. This local data communication device then to the current central data communication device 120 has transmitted current roaming information, which indicates that the data communication terminal 140 no longer is connected to the previous local data communication network. The current central data communication device 120 then has cut off the routing of data packets, which are addressed to the data communication terminal, to the previous data communication network and instead buffered these data packets.

The current central data communication device stores the IP-address to the current local data communication device 110 and transmits the IP-address of the data communication terminal 140 to the current local data communication device 110. The central data communication terminal 120 further will route data packets which are addressed to the data communication terminal 140, to the current local data communication device, and the current local data communication device 110 will route data packets, which are transmitted from the data communication terminal 140, to the current central data communication device 120.

Below an example when a data communication terminal 140 ceases to be connected to any local data communication network is described with reference to the Figures 1-3.

When a current local data communication device 110, which is connected to a local data communication network 102, detects that the data communication terminal has ceased to be connected to the local data communication network 102, it transmits current roaming information, which indicates this to the current central data communication device 120. The current central data communication device 120 breaks the routing of data packets, which are addressed to the data communication terminal, to the current local data communication device 110. The detection is made, for instance, by the current local data communication device 110 periodically using the function ping with regard to the data communication terminals which are indicated in the list over data communication terminals which are stored in the current local data communication device 110. If a data communication terminal is not accessible, the current local data communication device 110 will delete this data communication terminal from its list and inform the current central data communication device 120.

If the current central data communication device 120 then during one in advance defined period of time does not receive any current roaming information, which indicates that the data communication terminal 140 has been connected to a new local data communication network, it will set the IP-address free which the data communication terminal has been allocated, at which this address is accessible for allocation.

## Claims

1. Data communication device (120), which is connected to a central data communication network (101), for roaming for a data communication terminal (140) between local data communication networks (102,103) which are connected to the central data communication network (101) **characterized by;**
- a reception device (201) for reception of current association information, which indicates that the data communication terminal is associated with the data communication device, and for reception of current roaming information, which indicates a current local data communication device (110), which is connected to a local data communication network, to which the data communication terminal is connected;
- a storing device (202) for storing of the current association information and the current roaming information;
- an address handling device (203) for allocation of a temporary address to the data communication terminal; and
- a routing device (204) for routing of data packets, which have the data communication terminal as receiver, to the current local data communication device, at which
the address handling device, in the current central data communication device, is arranged to be allocated a temporary address, of a plurality of addresses which are specific for the current central data communication device, and the identification device in the current local data communication device is arranged to store information about which addresses that are specific for the current central data communication device, and to identify the current central data communication device on basis of the address of the data communication terminal.

2. Data communication device as claimed in claim 1, at which the current roaming information further indicates if the data communication terminal ceases to be connected to a local data communication network to which the current local data communication device is connected, and the routing device further is arranged to cut off/stop the routing of data packets, which have the data communication terminal as receiver, to the current local data communication device when the current roaming information indicates that the data communication terminal ceases to be connected to the local data communication network to which the current local data communication device is connected.

3. Data communication device as claimed in claim 2, at which the address handling device is arranged to set the temporary address free after one in advance defined period of time from the reception of the current roaming information, which indicates that the data communication terminal has ceased to be connected to the local data communication network to which the current local data communication device is connected, provided that no current roaming information, which indicates a new current local data communication device, which is connected to a local data communication network, to which the data communication terminal is connected, has been received/ obtained meanwhile.

4. Data communication device as claimed in claim 1, at which the current roaming information indicates the address to the current local data communication device, and the routing device is arranged to assemble received data packets, which have data communication terminal as receiver, in a tunneling data packet each, which has the address of the data communication device as transmitter/sender address and the address of the current local data communication device as receiver address.

5. Data communication device (110), which is connected to a local data communication network (102) and to a central data communication network (101), for roaming for a data communication terminal (140) between local data communication networks (102,103), which are connected to a central data communication network, **characterized by**:
- a detection device (301) for detection of that the data communication terminal is connected to the local data communication network;
- a reception device (302) for reception of current association information, which indicates a current central data communication device (110), to which the data communication terminal is associated;
- a storing device (303) for storing of the current association information;
- a transmission device (304) for transmission of current roaming information, which indicates that the data communication terminal is connected to the local data communication network; and
- a routing device (305) for routing of data packets, which have the data communication terminal as transmitter/sender, to the current central data communication device, and
an address handling device, in the current central data communication device, is arranged to allocate a temporary address of a plurality of addresses which are specific for the current central data communication device, and the identification device in the current local data communication device is arranged to store information regarding which addresses that are specific for the current central data communication device and to identify the current central data communication device on basis of the address of the data communication terminal.

6. Data communication device as claimed in claim 5, at which the detection device further is arranged to detect that the data communication terminal ceases to be connected to the local data communication network, and the transmission device further is arranged to transmit/send current roaming information which further indicates that the data communication terminal has ceased to be connected to the local data communication network.

7. Data communication device as claimed in claim 5 or 6, at which the routing device is arranged to assemble data packets, which have the data communication terminal as transmitter/sender, in a tunneling packet each which has the address of the data communication device as transmitter/sender address and the address of the current central data communication device as receiver address.

8. System for roaming for a data communication terminal (140) between local data communication networks (102,103) which are connected to a central data communication network (101), **characterized by**:
- local data communication devices (110,111), which are connected to a local data communication network (102,103) each, and to the central data communication network;
- central data communication devices (120,121,122), which are connected to the central data communication network; and
- a central control unit (130), which is connected to the central data communication devices via the central data communication network, which includes association device for association of the data communication terminal with a current central data communication device; and
- transmission device for transmission to the current central data communication device of current association information, which indicates that the data communication terminal is associated with the current central data communication device,
which current central data communication device includes a reception device (201) for reception of current association information, and for reception of current roaming information, which indicates a current local data communication device (110), which is connected to a local data communication network (102), to which the data communication terminal is connected; a storing device (202) for storing of the current association information and the current roaming information; an address handling device (203) for allocation of a temporary address to the data communication terminal; and a routing device (204) for routing of data packets, which have the data communication terminal as receiver, to the current local data communication device,
which current local data communication device includes a detection device (301) for detection of that the data communication terminal is connected to the local data communication network; a reception device (302) for reception of current association information which indicates the current central data communication device; a storing device (303) for storing of the current association information; a transmission device (304) for transmission of the current roaming information; and a routing device (305) for routing of data packets, which have the data communication terminal as transmitter/sender, to the current central data communication device,
the address handling device, in the current central data communication device, is arranged to allocate a temporary address of a plurality of addresses which are specific for the current central data communication device, and the identification device in the current local data communication device is arranged to store information regarding which addresses that are specific for the current central data communication device, and to identify the current central data communication device on basis of the address of the data communication terminal.

9. System as claimed in claim 8, at which the detection device in the current local data communication device further is arranged to detect that the data communication terminal ceases to be connected to the local data communication network, and the transmission device further is arranged to transmit current roaming information, which further indicates that the data communication terminal has ceased to be connected to the local data communication network, and the routing device in the current central data communication device further is arranged to cut off/stop the routing of data packets, which have the data communication terminal as receiver, to the current local data communication device when the current roaming information indicates that the data communication terminal ceases to be connected to the local data communication network to which the current local data communication device is connected.

10. System as claimed in claim 9, at which the address handling device in the current central data communication device is arranged to set the temporary address free after one in advance specified period of time from reception of current roaming information, which indicates that the data communication terminal has ceased to be connected to the local data communication network to which the current local data communication device is connected, provided that no current roaming information, which indicates a new current local data communication device, which is connected to a local data communication network, to which the data communication terminal is connected, has been received during the in advance specified time.

11. System as claimed in any of the claims 8 - 10, at which the current roaming information further indicates the address to the current local data communication device, and the routing device in the current central data communication device is arranged to assemble data packets, which have the data communication terminal as receiver, in a tunneling data packet each which has the address of the current central data communication device as transmitter address and the address of the current local data communication device as receiver address, and the routing device for the current local data communication device is arranged to assemble data packets, which have the data communication terminal as transmitter, in a tunneling data packet each, which has the address of the current local data communication device as transmitter/sender address, and the address of the current central data communication device as receiver address.

12. Method for roaming for a data communication terminal between local data communication networks which are connected to a central data communication network, including the steps:
- to associate a data communication terminal with a current central data communication unit which is connected to the central data communication network,
- to allocate a temporary address to the data communication terminal;
- to identify a current local data communication device, which is connected to a local data communication network, to which the data communication terminal is connected; and
- to, in the current central data communication unit, route a data packet, which has the data communication terminal as receiver, to the current local data communication device, that an address handling device, in the current central data communication device, is allocated a temporary address of a plurality of addresses, which are specific for the current central data communication device, and the identification device, in the current local data communication device, stores information about which addresses that are specific for the current data communication device and that the central communication device is identified on basis of the address of the data communication terminal.

13. Method as claimed in claim 12, at which the temporary address, which is allocated in the step to allocate a temporary address, is one of a plurality of addresses which are specific for the current central data communication device.

14. Method as claimed in claim 13, further including the steps:
- to identify the current central data communication device as the central data communication device for which 20 the address of the data communication terminal is specific.

15. Method as claimed in claim 14, at which the step to identify a current local data communication network includes the steps:
- to, in a local data communication device, detect that
the data communication terminal is connected to a local data communication network to which the local data communication device is connected;
- to, to the current central data communication device,30 transmit current roaming information, which indicates a current local data communication device, which is connected to the local data communication network, to which the data communication terminal is connected.

16. Method as claimed in claim 15, further including the steps:
- to in the current local data communication device detect that the data communication terminal ceases to be connected to the local data communication network to which the current local data communication device is connected;
- to, to the current central data communication device transmit current roaming information, which indicates that the data communication terminal has ceased to be connected to the local data communication network to which the current local data communication device is connected; and
- to cut off/stop the routing of data packets, which have the data communication terminal as receiver, to the current local data communication device after detection of that the data communication terminal ceases to be connected to the local data communication network to which the current local data communication device is connected.

17. Method as claimed in claim 16, further including the step;
to set the temporary address free after one in advance defined period of time from the detection of that the data communication terminal has ceased to be connected to the local data communication network to which the current local data communication device is connected, provided that no identification of a new current local data communication device which is connected to a local data communication network to which the data communication terminal is connected has been made during the in advance defined period of time.

18. Method as claimed in any of the claims 15-17 further including the step:
- to, in the current local data communication device, route data packets, which have the data communication terminal as transmitter/sender, to the current central data communication device.

## Patentansprüche

1. Datenkommunikationseinrichtung (120), die mit einem zentralen Datenkommunikationsnetz (101) für Roaming für ein Datenkommunikationsendgerät (140) zwischen lokalen Datenkommunikationsnetzen (102, 103) verbunden ist, die mit dem zentralen Datenkommunikationsnetz (101) verbunden sind, **gekennzeichnet durch**:
- eine Empfangseinrichtung (201) zum Empfang von gegenwärtiger Verknüpfungsinformation, die anzeigt, dass das Datenkommunikationsendgerät mit der Datenkommunikationseinrichtung verknüpft ist, und für Empfang von gegenwärtiger Roaminginformation, die eine gegenwärtige lokale Datenkommunikationseinrichtung (110) anzeigt, die mit einem lokalen Datenkommunikationsnetz verbunden ist, mit dem das Datenkommunikationsendgerät verbunden ist;
- eine Speichereinrichtung (202) zum Speichern der gegenwärtigen Verknüpfungsinformation und der gegenwärtigen Roaminginformation;
- eine Adressenhandhabungseinrichtung (203) zum Zuordnen einer zeitweiligen Adresse zu dem Datenkommunikationsendgerät; und
- eine Leitwegeinrichtung (204) zum Leiten von Datenpaketen, die das Datenkommunikationsendgerät als Empfänger haben, zur gegenwärtigen lokalen Datenkommunikationseinrichtung, wobei
die Adressenhandhabungseinrichtung in der gegenwärtigen zentralen Kommunikationseinrichtung dazu ausgebildet ist, dass ihr eine zeitweilige Adresse einer Mehrzahl von Adressen zugeteilt wird, die für die gegenwärtige zentrale Datenkommunikationseinrichtung spezifisch sind, und die Identifizierungseinrichtung in der gegenwärtigen lokalen Datenkommunikationseinrichtung dazu ausgebildet ist, Information darüber zu speichern, welche Adressen spezifisch für die gegenwärtige zentrale Datenkommunikationseinrichtung sind, und die gegenwärtige zentrale Datenkommunikationseinrichtung aufgrund der Adressen des Datenkommunikationsendgeräts zu identifizieren.

2. Datenkommunikationseinrichtung nach Anspruch 1, bei der die gegenwärtige Roaminginformation weiter anzeigt, ob das Datenkommunikationsendgerät aufhört, mit einem lokalen Datenkommunikationsnetz verbunden zu sein, mit dem die gegenwärtige lokale Datenkommunikationseinrichtung verbunden ist, und die Leitwegeinrichtung weiter dazu ausgebildet ist, das Leiten von Datenpaketen, die das Datenkommunikationsendgerät als Empfänger haben, zu der gegenwärtigen lokalen Datenkommunikationseinrichtung zu unterbrechen/beenden, wenn die gegenwärtige Roaminginformation anzeigt, dass das Datenkommunikationsendgerät aufhört, mit dem lokalen Datenkommunikationsnetz verbunden zu sein, mit der die gegenwärtige lokale Datenkommunikationseinrichtung verbunden ist.

3. Datenkommunikationseinrichtung nach Anspruch 2, bei der die Adressenhandhabungseinrichtung dazu ausgebildet ist, die zeitweilige Adresse nach einer vorher bestimmten Zeitperiode ab Empfang der gegenwärtigen Roaminginformation freizugeben, die anzeigt, dass das Datenkommunikationsgerät aufgehört halt, mit dem lokalen Datenkommunikationsnetz verbunden zu sein, mit dem die gegenwärtige lokale Datenkommunikationseinrichtung verbunden ist, vorausgesetzt, dass keine gegenwärtige Roaminginformation, die eine neue gegenwärtige lokale Datenkommunikationseinrichtung anzeigt, die mit dem lokalen Datenkommunikationsnetz verbunden ist, mit der das Datenkommunikationsendgerät verbunden ist, in der Zwischenzeit empfangen/erhalten worden ist.

4. Datenkommunikationseinrichtung nach Anspruch 1, bei der die gegenwärtige Roaminginformation die Adresse zu der gegenwärtigen lokalen Datenkommunikationseinrichtung anzeigt und die Leiteinrichtung dazu ausgebildet ist, empfangene Datenpakete, die Datenkommunikationsendgerät als Empfänger haben, jeweils in ein tunnelndes Datenpaket zusammenzusetzen, das die Adresse der Datenkommunikationseinrichtung als Übertrager-/Senderadresse und die Adresse der gegenwärtigen lokalen Datenkommunikationseinrichtung als Empfängeradresse hat.

5. Datenkommunikationseinrichtung (110), die mit einem lokalen Datenkommunikationsnetz (102) und einem zentralen Datenkommunikationsnetz (101) für Roaming für ein Datenkommunikationsendgerät (140) zwischen lokalen Datenkommunikationsnetzen (102, 103) verbunden ist, die mit einem zentralen Datenkommunikationsnetz verbunden sind, **gekennzeichnet durch**:
- eine Detektionseinrichtung (301) zum Detektierten, dass das Datenkommunikationsendgerät mit dem lokalen Datenkommunikationsnetz verbunden ist;
- eine Empfangseinrichtung (302) zum Empfang von gegenwärtiger Verknüpfungsinformation, die eine gegenwärtige zentrale Datenkommunikationseinrichtung (110) anzeigt, mit dem Datenkommunikationsendgerät verknüpft ist;
- eine Speichereinrichtung (303) zum Speichern der gegenwärtigen Verknüpfungsinformation;
- eine Übertragungseinrichtung (304) zum Übertragen von gegenwärtiger Roaminginformation, die anzeigt, dass das Datenkommunikationsendgerät mit dem lokalen Datenkommunikationsnetz verbunden ist; und
- eine Leitwegeinrichtung (305) zum Leiten von Datenpaketen, die das Datenkommunikationsendgerät als
Übertrager/Sender haben, zu der gegenwärtigen zentralen Datenkommunikationseinrichtung; und
**dadurch**, dass eine Adressenhandhabungseinrichtung in der gegenwärtigen zentralen Datenkommunikationseinrichtung dazu ausgebildet ist, eine zeitweilige Adresse einer Mehrzahl von Adressen, die für die gegenwärtige zentrale Datenkommunikationseinrichtung spezifisch sind, zuzuteilen, und dass die
Identifizierungseinrichtung in der gegenwärtigen lokalen Datenkommunikationseinrichtung dazu ausgebildet ist, Information zu speichern, die sich darauf bezieht, welche Adressen spezifisch für die gegenwärtige zentrale Datenkommunikationseinrichtungen sind, und die gegenwärtige zentrale Datenkommunikationseinrichtung aufgrund der Adressen des Datenkommunikationsendgerätes zu identifizieren.

6. Datenkommunikationseinrichtung nach Anspruch 5, bei der die Detektionseinrichtung weiter dazu ausgebildet ist, zu detektieren, dass das Datenkommunikationsendgerät aufhört, mit dem lokalen Datenkommunikationsnetz verbunden zu sein, und die Übertragungseinrichtung weiter dazu ausgebildet ist, gegenwärtige Roaminginformation, die weiter anzeigt, dass das Datenkommunikationsendgerät aufgehört hat, mit dem lokalen Datenkommunikationsnetz verbunden zu sein, zu übertragen/senden.

7. Datenkommunikationseinrichtung nach Anspruch 5 oder 6, bei der die Leitwegeinrichtung dazu ausgebildet ist, Datenpakete, die das Datenkommunikationsendgerät als Übertrager/Sender haben, jeweils in ein tunnelndes Paket zusammenzusetzen, das die Adresse der Datenkommunikationseinrichtung als Übertrager-/Senderadresse und die Adresse der gegenwärtigen zentralen Datenkommunikationseinrichtung als Empfängeradresse hat.

8. System für Roaming für ein Datenkommunikationsendgerät (140) zwischen lokalen Datenkommunikationsnetzen (102, 103), die mit einem zentralen Datenkommunikationsnetz (101) verbunden sind, **gekennzeichnet durch**:
- lokale Datenkommunikationseinrichtungen (110, 111), die jeweils mit einem lokalen Datenkommunikationsnetz (102, 103) und mit dem zentralen Datenkommunikationsnetz verbunden sind;
- zentrale Datenkommunikationseinrichtungen (120, 121, 122), die mit dem zentralen Datenkommunikationsnetz verbunden sind; und
- eine zentrale Steuereinheit (130), die mit den zentralen Datenkommnunikationseinrichtungen über das zentrale Datenkommunikationsnetz verbunden ist, die eine Verknüpfungseinrichtung für Verknüpfung des Datenkommunikationsendgeräts mit einer gegenwärtigen zentralen Datenkommunikationseinrichtung einschließt; und
- eine Übertragungseinrichtung zum Übertragen gegenwärtiger Verknüpfungsinformation, die anzeigt, dass das Datenkommunikationsendgerät mit der gegenwärtigen Datenkommunikationseinrichtung verknüpft ist, zu der gegenwärtigen zentralen Datenkommunikationseinrichtung,
welche gegenwärtige zentrale Datenkommunikationseinrichtung eine Empfangseinrichtung (201) zum Empfang gegenwärtiger Verknüpfungsinformation und für Empfang von gegenwärtiger
Roaminginformation, die eine gegenwärtige lokale Datenkommunikationseinrichtung (110) anzeigt, die mit einem lokalen Datenkommunikationsnetz (102) verbunden ist, mit dem das Datenkommunikationsendgerät verbunden ist; eine Speichereinrichtung (202) zum Speichern der gegenwärtigen Verknüpfungsinformation und der gegenwärtigen Roaminginformation; eine Adressenhandhabungseinrichtung (203) zum Zuteilen einer zeitweiligen Adresse zum Datenkommunikationsendgerät; und eine Leitwegeinrichtung (204) zum Leiten von Datenpaketen, die das Datenkommunikationsendgerät als Empfänger haben, zur gegenwärtigen lokalen Datenkommunikationseinrichtung einschließt,
welche gegenwärtige lokale Datenkommunikationseinrichtung eine Detektionseinrichtung (301) für Detektion, dass das Datenkommunikationsendgerät mit dem lokalen Datenkommunikationsnetz verbunden ist; eine Empfangseinrichtung (302) für Empfang von gegenwärtiger Verknüpfungsinformation, die die gegenwärtige zentrale Datenkommunikationseinrichtung anzeigt; eine Speichereinrichtung (303) zum Speichern der gegenwärtigen Verknüpfungsinformation; eine Übertragungseinrichtung (304) für Übertragung der gegenwärtigen Roaminginformation; und eine Leitwegeinrichtung (305) einschließt, um Datenpakete, die das Datenkommunikationsendgerät als Übertrager/Sender haben, zur gegenwärtigen zentralen Datenkommunikationseinrichtung zu leiten,
wobei die Adressenhandhabungseinrichtung in der gegenwärtigen zentralen Datenkommunikationseinrichtung dazu ausgebildet ist, eine zeitweilige Adresse einer Mehrzahl von Adressen, die für die gegenwärtige zentrale Datenkommunikationseinrichtung spezifisch sind, zuzuteilen, und wobei die Identifizierungseinrichtung der gegenwärtigen lokalen Datenkommunikationseinrichtung dazu ausgebildet ist, Information bezüglich der Adressen zu speichern, die für die gegenwärtige zentrale Datenkommunikationseinrichtung spezifisch sind, und um die gegenwärtige zentrale Datenkommunikationseinrichtung beruhend auf der Adresse des Datenkommunikationsendgerätes zu identifizieren.

9. System nach Anspruch 8, bei dem die Detektionseinrichtung in der gegenwärtigen lokalen Datenkommunikationseinrichtung weiter dazu ausgebildet ist, zu detektieren, dass das Datenkommunikationsendgerät aufhört, mit dem lokalen Datenkommunikationsnetz verbunden zu sein, und die Übertragungseinrichtung weiter dazu ausgebildet ist, gegenwärtige Roaminginformation zu übertragen, die weiter anzeigt, dass das Datenkommunikationsendgerät aufgehört hat, mit dem lokalen Datenkommunikationsnetz verbunden zu sein, und
wobei die Leitwegeinrichtung in der gegenwärtigen zentralen Datenkommunikationseinrichtung weiter dazu ausgebildet ist, das Leiten von Datenpaketen, die das Datenkommunikationsendgerät als Empfänger haben, zur gegenwärtigen lokalen Datenkommunikationseinrichtung abzubrechen/anzuhalten, wenn die gegenwärtige Roaminginformation anzeigt, dass das Datenkommunikationsendgerät aufhört, mit dem lokalen Datenkommunikationsnetz verbunden zu sein, mit dem die gegenwärtige lokale Datenkommunikationseinrichtung verbunden ist.

10. System nach Anspruch 9, bei dem die Adressenhandhabungseinrichtung in der gegenwärtigen zentralen Datenkommunikationseinrichtung dazu ausgebildet ist, die zeitweilige Adresse nach einer im Voraus angegebenen Zeitperiode ab Empfang der gegenwärtigen Roaminginformation freizumachen, die anzeigt, dass das Datenkommunikationsendgerät aufgehört hat, mit dem lokalen Datenkommunikationsnetz verbunden zu sein, mit dem die gegenwärtige lokale Datenkommunikationseinrichtung verbunden ist, vorausgesetzt, dass keine gegenwärtige Roaminginformation, die eine neue gegenwärtige lokale Datenkommunikationseinrichtung anzeigt, die mit einem lokalen Datenkommunikationsnetz verbunden ist, mit dem das Datenkommunikationsendgerät verbunden ist, während der im Voraus angegebenen Zeit empfangen worden ist.

11. System nach einem der Ansprüche 8 bis 10, bei dem die gegenwärtige Roaminginformation weiter die Adresse zu der gegenwärtigen lokalen Datenkommunikationseinrichtung anzeigt und die Leitwegeinrichtung in der gegenwärtigen zentralen Datenkommunikationseinrichtung dazu ausgebildet ist, Datenpakete, die das Datenkommunikationsendgerät als Empfänger haben, jeweils in ein tunnelndes Datenpaket zusammenzusetzen, das die Adresse der gegenwärtigen zentralen Datenkommunikationseinrichtung als Übertrageradresse und die Adresse der gegenwärtigen lokalen Datenkommunikationseinrichtung als Empfängeradresse hat, und wobei die Leitwegeinrichtung für die gegenwärtige lokale Datenkommunikationseinrichtung dazu ausgebildet ist, Datenpakete, die das Datenkommunikationsendgerät als Übertrager haben, jeweils in ein tunnelndes Datenpaket zusammenzusetzen, das die Adresse der gegenwärtigen lokalen Datenkommunikationseinrichtung als Übertrager-/Senderadresse und die Adresse der gegenwärtigen zentralen Datenkommunikationseinrichtung als Empfängeradresse halt.

12. Verfahren für Roaming für ein Datenkommunikationsendgerät zwischen lokalen Datenkommunikationsnetzen, die mit einem zentralen Datenkommunikationsnetz verbunden sind, das die Schritte einschließt:
- ein Datenkommunikationsnetz mit einer gegenwärtigen zentralen Datenkommunikationseinheit zu verknüpfen, die mit dem zentralen Datenkommunikationsnetz verbunden ist,
- eine zeitweilige Adresse dem Datenkommunikationsendgerät zuzuweisen;
- eine gegenwärtige lokale Datenkommunikationseinrichtung zu identifizieren, die mit einem lokalen Datenkommunikationsnetz verbunden ist, mit dem das Datenkommunikationsendgerät verbunden ist; und
- in der gegenwärtigen zentralen Datenkommunikationseinheit ein Datenpaket, das das Datenkommunikationsendgerät als Empfänger hat, zu der gegenwärtigen lokalen Datenkommunikationseinrichtung zu leiten, dass einer Adressenhandhabungseinrichtung in der gegenwärtigen zentralen Datenkommunikationseinrichtung eine zeitweilige Adresse einer Mehrzahl von Adressen zugeteilt wird, die spezifisch für die gegenwärtige zentrale Datenkommunikationseinrichtung sind, und dass die Identifizierungseinrichtung in der gegenwärtigen lokalen Datenkommunikationseinrichtung Information über die Adressen speichert, die spezifisch für die gegenwärtige Datenkommunikationseinrichtung sind, und dass die zentrale Kommunikationseinrichtung aufgrund der Adressen des Datenkommunikationsendgerätes identifiziert wird.

13. Verfahren nach Anspruch 12, bei dem die zeitweilige Adresse, die in dem Schritt zugeteilt ist, eine zeitweilige Adresse zuzuteilen, eine einer Mehrzahl von Adressen ist, die für die gegenwärtige zentrale Datenkommunikationseinrichtung spezifisch sind.

14. Verfahren nach Anspruch 13, das weiter die Schritte aufweist:
- die gegenwärtige zentrale Datenkommunikationseinrichtung als die zentrale Datenkommunikationseinrichtung zu identifizieren, für die 20 die Adresse des Datenkommunikationsendgerätes spezifisch ist.

15. Verfahren nach Anspruch 14, bei dem der Schritt, ein gegenwärtiges lokales Datenkommunikationsnetz zu identifizieren, die Schritte einschließt:
- in einer lokalen Datenkommunikationseinrichtung zu detektieren, dass das Datenkommunikationsendgerät mit einem lokalen Datenkommunikationsnetz verbunden ist, mit dem die lokale Datenkommunikationseinrichtung verbunden ist;
- zu der gegenwärtigen zentralen Datenkommunikationseinrichtung 30 gegenwärtige Roaminginformation zu übertragen, die eine gegenwärtige lokale Datenkommunikationseinrichtung anzeigt, die mit dem lokalen Datenkommunikationsnetz verbunden ist, mit dem das Datenkommunikationsendgerät verbunden ist.

16. Verfahren nach Anspruch 15, das weiter die Schritte aufweist:
- in der gegenwärtigen lokalen Datenkommunikationseinrichtung zu detektieren, dass das Datenkommunikationsendgerät aufhört, mit dem lokalen Datenkommunikationsnetz verbunden zu sein, mit dem die gegenwärtige lokale Datenkommunikationseinrichtung verbunden ist;
- zu der gegenwärtigen zentralen Datenkommunikationseinrichtung gegenwärtige Roaminginformation zu übertragen, die anzeigt, dass das Datenkommunikationsendgerät aufgehört hat, mit dem lokalen Datenkommunikationsnetz verbunden zu sein, mit dem die gegenwärtige lokale Datenkommunikationseinrichtung verbunden ist; und
- das Leiten von Datenpaketen, die das Datenkommunikationsendgerät als Empfänger haben, zu der gegenwärtigen lokalen Datenkommunikationseinrichtung abzubrechen/zu beenden, nachdem festgestellt worden ist, dass das Datenkommunikationsendgerät aufhört, mit dem lokalen Datenkommunikationsnetz verbunden zu sein, mit dem die gegenwärtige lokale Datenkommunikationseinrichtung verbunden ist.

17. Verfahren nach Anspruch 16, das weiter den Schritt aufweist:
- die gegenwärtige Adresse nach einer im Voraus definierten Zeitperiode ab Feststellung, daß das Datenkommunikationsendgerät aufgehört hat, mit dem lokalen Kommunikationsnetz verbunden zu sein, mit dem die gegenwärtige lokale Kommunikationseinrichtung verbunden ist, freizugeben, vorausgesetzt, dass keine Identifizierung einer neuen gegenwärtigen lokalen Datenkommunikationseinrichtung, die mit einem lokalen Datenkommunikationsnetz verbunden ist, mit dem das Datenkommunikationsendgerät verbunden ist, während der im Voraus bestimmten Zeitperiode gemacht worden ist.

18. Verfahren nach einem der Ansprüche 15 bis 17, das weiter den Schritt aufweist:
- in der gegenwärtigen lokalen Datenkommunikationseinrichtung Datenpakete, die das Datenkommunikationsendgerät als Übertrager/Sender haben, zu der gegenwärtigen zentralen Datenkommunikationseinrichtung zu leiten.

## Revendications

1. Dispositif de communication de données (120), qui est connecté à un réseau de communication de données central (101), afin d'assurer l'itinérance d'un terminal de communication de données (140) entre des réseaux de communication de données locaux (102, 103) qui sont connectés au réseau de communication de données central (101) **caractérisé par** ;
un dispositif de réception (201) destiné à recevoir des informations d'association courantes, qui indiquent que le terminal de communication de données est associé au dispositif de communication de données, et à recevoir des informations d'itinérance courantes, qui indiquent un dispositif de communication de données local courant (110), qui est connecté à un réseau de communication de données local, auquel le terminal de communication de données est connecté ;
un dispositif de mémorisation (202) destiné à mémoriser les informations d'association courantes et les informations d'itinérance courantes ;
un dispositif de gestion d'adresse (203) destiné à affecter une adresse temporaire au terminal de communication de données ; et
un dispositif d'acheminement (204) destiné à acheminer des paquets de données, qui ont, en tant que récepteur, le terminal de communication de données, vers le dispositif de communication de données local courant, sur lequel
le dispositif de gestion d'adresse, dans le dispositif de communication de données central courant, est agencé de manière à être affecté d'une adresse temporaire, d'une pluralité d'adresses qui sont spécifiques du dispositif de communication de données central courant, et le dispositif d'identification dans le dispositif de communication de données local courant est agencé afin de mémoriser des informations concernant les adresse qui sont spécifiques du dispositif de communication de données central courant, et d'identifier le dispositif de communication de données central courant sur la base de l'adresse du terminal de communication de données.

2. Dispositif de communication de données selon la revendication 1, sur lequel les informations d'itinérance courantes indiquent, en outre, si le terminal de communication de données cesse d'être connecté à un réseau de communication de données local auquel le dispositif de communication de données local courant est connecté, et le dispositif d'acheminement est, en outre, agencé de manière à interrompre/arrêter l'acheminement des paquets de données, qui ont, en tant que récepteur, le terminal de communication de données, vers le dispositif de communication de données local courant lorsque les informations d'itinérance courantes indiquent que le terminal de communication de données cesse d'être connecté au réseau de communication de données local auquel le dispositif de communication de données local courant est connecté.

3. Dispositif de communication de données selon la revendication 2, sur lequel le dispositif de gestion d'adresse est agencé de manière à définir l'adresse temporaire libre après une période définie à l'avance par rapport à la réception des informations d'itinérance courantes, qui indiquent que le terminal de communication de données a cessé d'être connecté au réseau de communication de données local auquel le dispositif de communication de données local courant est connecté, à condition qu'aucune information d'itinérance courantes, qui indique un nouveau dispositif de communication de données local courant, qui est connecté à un réseau de communication de données local, auquel le terminal de communication de données est connecté, n'ait été reçue/obtenue parallèlement.

4. Dispositif de communication de données selon la revendication 1, sur lequel les informations d'itinérance courantes indiquent l'adresse au dispositif de communication de données local courant, et le dispositif d'acheminement est agencé de manière à assembler des paquets de données reçus, qui ont, en tant que récepteur, le terminal de communication de données, chacun en un paquet de données de tunnelisation qui a, en tant qu'adresse de transmetteur/émetteur, l'adresse du dispositif de communication de données et, en tant qu'adresse de récepteur, l'adresse du dispositif de communication de données local courant.

5. Dispositif de communication de données (110), qui est connecté à un réseau de communication de données local (102) et à un réseau de communication de données central (101), afin d'assurer l'itinérance d'un terminal de communication de données (140) entre les réseaux de communication de données locaux (102, 103) qui sont connectés à un réseau de communication de données central, **caractérisé par** :
un dispositif de détection (301) destiné à détecter le terminal de communication de données qui est connecté au réseau de communication de données local ;
un dispositif de réception (302) destiné à recevoir des informations d'association courantes, qui indiquent un dispositif de communication de données central courant (110), auquel le terminal de communication de données est associé ;
un dispositif de mémorisation (303) destiné à mémoriser les informations d'association courantes ;
un dispositif de transmission (304) destiné à transmettre des informations d'itinérance courantes, qui indiquent que le terminal de communication de données est connecté au réseau de communication de données local ; et
un dispositif d'acheminement (305) destiné à acheminer des paquets de données, qui ont, en tant que transmetteur/émetteur, le terminal de communication de données, vers le dispositif de communication de données central courant, et
un dispositif de gestion d'adresse, sur le dispositif de communication de données central courant, est agencé de manière à affecter une adresse temporaire d'une pluralité d'adresses qui sont spécifiques pour le dispositif de communication de données central courant, et le dispositif d'identification, dans le dispositif de communication de données local courant, est agencé de manière à stocker des informations se rapportant aux adresses qui sont spécifiques du dispositif de communication de données central courant et à identifier le dispositif de communication de données central courant sur la base de l'adresse du terminal de communication de données.

6. Dispositif de communication de données selon la revendication 5, sur lequel le dispositif de détection est, en outre, agencé afin de détecter que le terminal de communication de données cesse d'être connecté au réseau de communication de données local, et le dispositif de transmission est, en outre, agencé de manière à transmettre/envoyer des informations d'itinérance courantes qui indiquent, en outre, que le terminal de communication de données a cessé d'être connecté au réseau de communication de données local.

7. Dispositif de communication de données selon la revendication 5 ou 6, sur lequel le dispositif d'acheminement est agencé pour assembler des paquets de données, qui ont, en tant que transmetteur/émetteur, le terminal de communication de données, chacun en un paquet de tunnelisation qui a, en tant qu'adresse de transmetteur/émetteur, l'adresse du dispositif de communication de données et, en tant qu'adresse de récepteur, l'adresse du dispositif de communication de données central courant.

8. Système destiné à assurer l'itinérance pour un terminal de communication de données (140) entre des réseaux communication de données locaux (102, 103) qui sont connectés à un réseau de communication de données central (101),
**caractérisé par** :
des dispositifs de communication de données locaux (110, 111), qui sont chacun connectés à un réseau de communication de données local (102, 103), et au réseau de communication de données central ;
des dispositifs de communication de données centraux (120, 121, 122), qui sont connectés au réseau de communication de données central ; et
une unité de commande centrale (130), qui est connectée aux dispositifs de communication de données centraux par intermédiaire d'un réseau de communication de données central, qui comporte un dispositif d'association destiné à associer le terminal de communication de données avec un dispositif de communication de données central courant ; et
un dispositif de transmission destiné transmettre au dispositif de communication de données central courant des informations d'association courantes, qui indiquent que le terminal de communication de données est associé au dispositif de communication de données central courant,
lequel dispositif de communication de données central courant comporte un dispositif de réception (201) afin d'assurer la réception d'informations d'association courantes, et la réception d'informations d'itinérance courantes, qui indiquent un dispositif de communication de données local courant (110), qui est connecté au réseau de communication de données local (102), auquel est connecté le terminal de communication de données ; un dispositif de mémorisation (202) destiné à mémoriser les informations d'association courantes et les informations d'itinérance courantes ; un dispositif de gestion d'adresse (203) destiné à affecter une adresse temporaire au terminal de communication de données ; et un dispositif d'acheminement (204) destiné à acheminer des paquets de données, qui ont, en tant que récepteur, le terminal de communication de données, au dispositif de communication de données local courant,
lequel dispositif de communication de données local courant comporte un dispositif de détection (301) afin de détecter que le terminal de communication de données est connecté au réseau de communication de données local ; un dispositif de réception (302) afin de recevoir des informations d'association courantes qui indiquent le dispositif de communication de données central courant ; un dispositif de mémorisation (303) destiné à mémoriser les informations d'association courantes ;un dispositif de transmission (304) destiné à assurer la transmission des informations d'itinérance courantes ; et un dispositif d'acheminement (305) destiné à acheminer des paquets de données, qui ont le terminal de communication de données en tant que transmetteur/émetteur, vers le dispositif de communication de données central courant,
le dispositif de gestion d'adresse, dans le dispositif de communication de données central courant, est agencé afin d'affecter une adresse temporaire d'une pluralité d'adresses qui sont spécifiques du dispositif de communication de données central courant, et le dispositif d'identification dans le dispositif de communication de données local courant est agencé afin de mémoriser les informations se rapportant aux adresses qui sont spécifiques du dispositif de communication de données central courant, et d'identifier le dispositif de communication de données central courant sur la base de l'adresse du terminal de communication de données.

9. Système selon la revendication 8, sur lequel le dispositif de détection dans le dispositif de communication de données local courant est, en outre, agencé de manière à détecter que le terminal de communication de données cesse d'être connecté au réseau de communication de données local, et le dispositif de transmission est, en outre, agencé pour transmettre des informations d'itinérance courantes, qui indiquent, en outre, que le terminal de communication de données a cessé d'être connecté au réseau de communication de données local, et le dispositif d'acheminement dans le dispositif de communication de données central courant est, en outre, agencé de manière à interrompre/arrêter l'acheminement des paquets de données, qui ont, en tant que récepteur, le terminal de communication de données, vers le dispositif de communication de données local courant lorsque les informations d'itinérance courantes indique que le terminal de communication de données cesse d'être connecté au réseau de communication de données local auquel le dispositif de communication de données local courant est connecté.

10. Système selon la revendication 9, sur lequel le dispositif de gestion d'adresse dans le dispositif de communication de données central courant est agencé afin de définir l'adresse temporaire libre après une période spécifiée à l'avance à partir de la réception des informations d'itinérance courantes, qui indiquent que le terminal de communication de données a cessé d'être connecté au réseau de communication de données local auquel le dispositif de communication de données local courant est connecté, à la condition qu'aucune information d'itinérance courante, qui indique un nouveau dispositif de communication de données local courant, qui est connecté à un réseau de communication de données local, auquel le terminal de communication de données est connecté, n'ait été reçue au cours de la période spécifié à l'avance.

11. Système selon l'une quelconque des revendications 8 à 10, sur lequel les informations d'itinérance courantes indiquent, en outre, l'adresse au dispositif de communication de données local courant, et le dispositif d'acheminement sur le dispositif de communication de données central courant est agencé de manière à assembler des paquets de données, qui ont, en tant que récepteur, le terminal de communication de données, chacun en un paquet de données de tunnelisation qui a, en tant qu'adresse d'émetteur, l'adresse du dispositif de communication de données central courant et, en tant qu'adresse de récepteur, l'adresse du dispositif de communication de données local courant, et le dispositif d'acheminement pour le dispositif de communication de données local courant est agencé de manière à assembler des paquets de données, qui ont, en tant qu'émetteur, le terminal de communication de données, chacun en un paquet de données de tunnelisation, qui a, en tant qu'adresse de transmetteur/émetteur, l'adresse du dispositif de communication de données local courant, et, en tant qu'adresse de récepteur, l'adresse du dispositif de communication de données central courant.

12. Procédé destiné à assurer l'itinérance pour un terminal de communication de données entre des réseaux de communication de données locaux qui sont connectés à un réseau de communication de données central, comportant les étapes :
d'association d'un terminal de communication de données avec une unité de communication de données centrale courante qui est connectée au réseau de communication de données central,
d'affectation d'une adresse temporaire au terminal de communication de données ;
d'identification du dispositif de communication de données local courant, qui est connecté à un réseau de communication de données local, auquel le terminal de communication de données est connecté ; et
dans l'unité de communication de données centrale courante, d'acheminement d'un paquet de données, qui a, en tant que récepteur, le terminal de communication de données, vers le dispositif de communication de données local courant, un dispositif de gestion d'adresse, dans le dispositif de communication de données central courant, étant affecté d'une adresse temporaire d'une pluralité d'adresses, qui sont spécifiques au dispositif de communication de données central courant, et le dispositif d'identification, dans le dispositif de communication de données local courant, mémorise des informations concernant des adresses qui sont spécifiques au dispositif de communication de données courant et le dispositif de communication central étant identifié sur la base de l'adresse du terminal de communication de données.

13. Procédé selon la revendication 12, dans lequel l'adresse temporaire, qui est affectée à l'étape d'affectation d'une adresse temporaire, est l'une d'une pluralité d'adresses qui sont spécifiques au dispositif de communication de données central courant.

14. Procédé selon la revendication 13, comportant, en outre, les étapes :
d'identification du dispositif de communication de données central courant en tant que dispositif de communication de données central pour lequel, 20, l'adresse du terminal de communication de données est spécifique.

15. Procédé selon la revendication 14, dans lequel l'étape d'identification d'un réseau de communication de données local courant comporte les étapes :
dans un dispositif de communication de données local, de détection du fait que le terminal de communication de données est connecté à un réseau de communication de données local auquel le dispositif de communication de données local est connecté ;
sur le dispositif de communication de données central courant, 30, de transmission des informations d'itinérance courantes, qui indiquent un dispositif de communication de données local courant, qui est connecté au réseau de communication de données local, auquel le terminal de communication de données est connecté.

16. Procédé selon la revendication 15, comportant, en outre, les étapes :
dans le dispositif de communication de données local courant, de détection du fait que le terminal de communication de données cesse d'être connecté au réseau de communication de données local auquel le dispositif de communication de données local courant est connecté ;
sur le dispositif de communication de données central courant, de transmission des informations d'itinérance courantes, qui indiquent que le terminal de communication de données a cessé d'être connecté au réseau de communication de données local auquel le dispositif de communication de données local courant est connecté : et
d'interruption/arrêt de l'acheminement des paquets de données, qui ont, en tant que récepteur, le terminal de communication de données, vers la dispositif de communication de données local courant après détection du fait que le terminal de communication de données a cessé d'être connecté au réseau de communication de données local auquel le dispositif de communication de données local courant est connecté.

17. Procédé selon la revendication 16, comportant, en outre, l'étape ;
de définition de l'adresse temporaire libre après une période définie à l'avance par rapport à la détection du fait que le terminal de communication de données a cessé d'être connecté au réseau de communication de données local auquel le dispositif de communication de données local courant est connecté, à la condition qu'aucune identification d'un nouveau dispositif de communication de données local courant qui est connecté à un réseau de communication de données local auquel le terminal de communication de données est connecté n'ait été réalisée au cours de la période définie à l'avance.

18. Procédé selon l'une quelconque des revendications 15 à 17 comportant, en outre, l'étape :
dans le dispositif de communication de données local courant, d'acheminement des paquets de données qui ont, en tant que transmetteur/émetteur, le terminal de communication de données, vers le dispositif de communication de données central courant.
